# FASCICULE DE BREVET EUROPEEN

(11) **EP 1 068 447 B1**
(45) Date de publication et mention de la délivrance du brevet: **26.02.2003**
(21) Numéro de dépôt: 99911867.2
(22) Date de dépôt: 02.04.1999
(51) Int. Cl.: F03G 7/06, B64G 1/44

(54) **DISPOSITIF DE COMMANDE D'UNE ROTATION RELATIVE ENTRE DEUX ELEMENTS ARTICULES ET STRUCTURE DEPLOYABLE, NOTAMMENT POUR VEHICULE SPATIAL, UTILISANT AU MOINS UN DISPOSITIF DE CE TYPE**
ANTRIEBSGERÄT FÜR EINE DREHBEWEGUNG ZWISCHEN ZWEI GELENKIG VERBUNDENEN GLIEDERN UND ENTFALTBARE STRUKTUR, INSBESONDERS FÜR RAUMFAHRZEUGE, MIT ANWENDUNG VON ZUMINDEST EINEM SOLCHEN GERÄT
DEVICE FOR CONTROLLING THE RELATIVE ROTATION BETWEEN TWO ARTICULATED ELEMENTS AND UNFOLDING STRUCTURE, IN PARTICULAR FOR SPACE VEHICLE, USING AT LEAST SUCH A DEVICE

(30) Priorité: 06.04.1998 FR 9804242
(43) Date de publication de la demande: 17.01.2001
(73) Titulaire: ALCATEL, 75008 Paris (FR)
(72) Inventeur: VEZAIN, Gérard, F-06210 Mandelieu (FR); KERHOUSSE, Patrice, F-06200 Nice (FR); VIALE, Daniel, F-83440 Tanneron (FR); BAUDASSE, Yannick, F-06150 Cannes la Bocca (FR); REIMBOLD, François, F-06110 Le Cannet-Rocheville (FR)
(74) Mandataire: Audier, Philippe André
(86) Numéro de dépôt international: FR9900774
(87) Numéro de publication internationale: WO99051878

(56) Documents cités:
- DE-A- 4 113 504
- FR-A- 2 684 638
- FR-A- 2 761 116
- US-A- 3 733 758
- US-A- 4 798 051
- US-A- 5 127 228

## Description

### Domaine technique

L'invention concerne principalement un dispositif conçu pour commander une rotation relative entre deux éléments articulés l'un par rapport à l'autre autour d'un axe donné.

L'invention concerne également une structure mécanique déployable, telle qu'un générateur solaire, un radiateur ou une antenne sur un véhicule spatial, dont le déploiement est commandé à l'aide d'un ou plusieurs dispositifs de ce type.

L'invention trouve une application privilégiée dans le cadre de la motorisation des différentes structures mécaniques qui équipent les véhicules spatiaux (satellites, sondes spatiales, etc.). Elle peut toutefois être utilisée dans d'autres domaines, dès lors que le déploiement ou le repli d'une structure mécanique doit pouvoir être commandé, avec un couple élevé et une forte amplitude, à l'aide d'un dispositif compact intégré à la structure.

### Etat de la technique

Lors du lancement d'un véhicule spatial, il est nécessaire de maintenir un certain nombre d'équipements tels que les générateurs solaires, les radiateurs, les antennes ou autres, en position repliée. En effet, cette configuration leur permet de supporter les charges induites par le lancement et d'être compatibles avec le volume restreint qui leur est alloué sur le lanceur. Les dispositifs assurant ce maintien en position repliée sont généralement appelés "dispositifs de gerbage".

Un véhicule spatial doit donc comporter des dispositifs de commande de déploiement, qui sont actionnés lorsque le véhicule est en orbite, après que les dispositifs de gerbage aient été déverrouillés.

La plupart des dispositifs de commande de déploiement actuels utilisent soit des ressorts précontraints, soit des moteurs électriques.

Lorsqu'une motorisation par ressort est utilisée, il se produit un choc important en fin de déploiement, ce qui risque d'endommager ou de dérégler les équipements embarqués sur le véhicule spatial. Pour remédier à cet inconvénient, on adjoint fréquemment un régulateur aux dispositifs de commande à ressort. Toutefois, cela diminue la fiabilité du mécanisme.

Lorsqu'un moteur électrique est utilisé pour commander le déploiement, cela se traduit par des contraintes d'aménagement liées à l'encombrement du moteur. De plus, l'ensemble constitué par le moteur et par son électronique de commande accroît de façon sensible le coût de l'équipement et, par conséquent, du véhicule spatial.

Dans le document FR-A-2 684 638, il a été proposé de motoriser le déploiement d'une structure mécanique au moyen d'un ressort de torsion, d'une lame ou d'un barreau de poussée par allongement, réalisé en un alliage bistable à mémoire de forme. Le changement de structure métallurgique est obtenu soit en chauffant localement cet organe moteur à l'une de ses extrémités, soit en le chauffant uniformément, mais de manière contrôlée. Un dispositif de verrouillage maintient la structure dans son état final déployé, lorsqu'elle parvient dans cette configuration.

L'utilisation d'un organe moteur en un alliage à mémoire de forme, pour commander le déploiement d'une structure mécanique de véhicule spatial, supprime les inconvénients découlant de l'utilisation de ressorts précontraints ou de moteurs électriques. Cependant, les solutions préconisées dans le document FR-A-2 684 638 présentent un certain nombre d'inconvénients.

Ainsi, lorsqu'un ressort de torsion est utilisé, il est nécessaire d'avoir recours à un ressort lourd et encombrant pour produire une puissance importante et engendrer un couple de rotation élevé.

Lorsque l'organe moteur se présente sous la forme d'une lame, il n'est pratiquement pas possible de commander des angles de déploiement importants.

Enfin, l'utilisation d'un barreau de poussée nécessite une démultiplication mécanique contraignante en termes de masse et d'encombrement.

Par ailleurs, lorsque le réchauffage de l'organe moteur s'effectue de manière uniforme, le document FR-A-2 684 638 propose de piloter le réchauffage pour contrôler la cinématique de déploiement. Cela impose une électronique de commande complexe et coûteuse.

En outre, dans le cas où l'organe moteur est chauffé à une extrémité, la propagation naturelle de la chaleur le long de cet organe se traduit par des températures très élevées au niveau du dispositif de réchauffage, en raison du fort gradient de température entre les deux extrémités de l'organe moteur.

Enfin, du fait que le déploiement de la structure mécanique est généralement bloqué en fin de course, lorsque l'angle de déploiement désiré est atteint, le couple engendré par l'organe moteur est supporté par ce même organe et risque de provoquer sa cassure, après la venue en butée. Cet inconvénient ne peut être éliminé qu'à la condition de synchroniser le verrouillage et l'arrêt du réchauffage, ce qui conduit à compliquer encore le dispositif et son électronique de commande.

### Exposé de l'invention

L'invention a principalement pour objet un dispositif permettant de commander une rotation relative entre deux éléments au moyen d'un organe moteur réalisé dans un alliage bistable à mémoire de forme, afin de profiter des avantages découlant de l'utilisation d'un tel organe, tout en permettant d'engendrer un couple de rotation élevé et d'atteindre un angle de déploiement important, pour un encombrement, un poids et un coût relativement réduits.

Conformément à l'invention, ce résultat est obtenu au moyen d'un dispositif de commande d'une rotation relative entre deux éléments articulés l'un à l'autre autour d'un axe donné, le dispositif comprenant une barre de torsion en alliage bistable à mémoire de forme, centrée sur ledit axe et liée à chacun des éléments en des emplacements espacés selon ledit axe, et des moyens de chauffage de la barre, dont une mise en oeuvre engendre ladite rotation relative, sous l'effet d'un changement de structure métallurgique de l'alliage, le dispositif étant caractérisé en ce que la barre de torsion est apte à engendrer un angle de rotation relative entre lesdits emplacements de la barre, supérieur à un angle prédéterminé de rotation relative à commander entre les éléments, une butée étant prévue pour limiter l'angle de rotation relative entre les éléments audit angle prédéterminé, et au moins un fusible mécanique étant prévu entre la barre de torsion et un premier desdits éléments, pour absorber une rotation relative excédentaire entre lesdits emplacements de la barre, au-delà dudit angle prédéterminé.

L'utilisation d'un organe moteur constitué par une barre en un alliage bistable à mémoire de forme, travaillant en torsion, permet d'engendrer un couple de rotation élevé et d'atteindre un angle de déploiement important, pour un encombrement et un poids restant particulièrement faibles. Dans le cas où le dispositif selon l'invention est utilisé en parallèle avec un système de déploiement élastique (par exemple un générateur solaire à plusieurs volets dont plusieurs lignes d'articulation sont motorisées par ressort) la barre en alliage bistable à mémoire de forme peut permettre d'apporter un surcroît de motorisation pour aider le déploiement d'une ligne d'articulation défaillante, grâce à des éléments de transmission complémentaires (par exemple, poulies et câbles de conjugaison). De plus, il n'est pas nécessaire d'avoir recours à une électronique de commande complexe, puisque le réchauffage de la barre de torsion s'effectue sans qu'il soit nécessaire de le contrôler ni de le piloter. En outre, un dispositif de commande ainsi conçu présente une grande fiabilité, et une remarquable simplicité de fonctionnement et d'aménagement.

De plus, la présence d'un fusible mécanique et d'une butée permet d'absorber le couple qui continue à être engendré par la barre de torsion lorsque les deux éléments arrivent en butée. L'intégrité de la barre est ainsi préservée, sans qu'il soit nécessaire de synchroniser le verrouillage et l'arrêt du réchauffage.

De préférence, le fusible mécanique est constitué par une tige de moindre section que la barre de torsion, qui prolonge celle-ci selon l'axe d'articulation des deux éléments et dont les extrémités sont liées en rotation respectivement à une extrémité de la barre et au premier élément.

Avantageusement, un moyen élastique tel qu'un ressort est alors interposé entre la tige et le premier élément, de façon à solliciter celui-ci vers la barre de torsion, selon l'axe précité.

Pour fiabiliser le fonctionnement en orbite, le fusible pourra éventuellement être remplacé avant le lancement par un pièce très résistante afin d'éviter la rupture prématurée dudit fusible en cas de point dur rencontré lors du dernier déploiement.

Dans la forme de réalisation préférée de l'invention, les moyens de chauffage comprennent des réchauffeurs répartis sur toute la longueur de la barre de torsion, collés sur celle-ci et maintenus individuellement par des bagues de cerclage.

Par ailleurs, un mécanisme de verrouillage antiretour est prévu pour s'opposer à toute rotation inverse, après ladite rotation relative entre les éléments.

L'invention concerne également une structure mécanique déployable, comprenant au moins deux éléments reliés l'un à l'autre par au moins une articulation et occupant initialement une configuration repliée, et au moins un dispositif de commande conforme à l'invention, intégré dans ladite articulation, apte à amener la structure dans une configuration au moins partiellement déployée.

Par rapport aux techniques de motorisation classiques, à ressorts surdimensionnés, et en plus des avantages déjà mentionnés, cet agencement permet d'augmenter considérablement (par exemple, de multiplier au moins par quatre) la marge de motorisation, c'est-à-dire le rapport entre le couple moteur et le couple résistant. En effet, la vitesse de fonctionnement du dispositif est très lente, quelle que soit la valeur du couple appliqué, de sorte qu'aucun choc de verrouillage ne se produit.

Lorsque la structure mécanique déployable comprend au moins trois éléments reliés l'un à l'autre par au moins une articulation, au moins un dispositif de commande est intégré dans l'une de ces articulations et des moyens de conjugaison relient les articulations entre elles, de façon telle qu'une mise en oeuvre du dispositif de commande amène tous les éléments de la structure dans la configuration déployée.

Lorsqu'un déploiement partiel d'au moins un dernier élément d'une telle structure mécanique déployable doit avoir lieu, par exemple en phase de transfert d'un véhicule spatial sur lequel est embarquée la structure, au moins un premier dispositif de commande est intégré dans une première articulation reliant le dernier élément de la structure à un élément adjacent, pour commander le déploiement partiel de ce dernier élément. Au moins un deuxième dispositif de commande est alors également intégré dans une deuxième articulation de la structure, pour amener celle-ci dans sa configuration déployée, au travers des moyens de conjugaison.

Avantageusement, le deuxième dispositif de commande est alors relié au dernier élément de la structure au travers de moyens de rattrapage de jeu aptes à venir en prise lorsque le déploiement partiel du dernier élément a été commandé par le premier dispositif de commande.

### Brève description des dessins

On décrira à présent, à titre d'exemple non limitatif, une forme de réalisation préférée de l'invention, en se référant aux dessins annexés, dans lesquels :
Les figures 1A, 1B et 1C illustrent de façon très schématique, en perspective, un dispositif de commande conforme à l'invention, respectivement dans sa configuration initiale de repos, lorsque l'angle prédéterminé de rotation relative à commander est atteint, et à la fin de la mise en oeuvre du dispositif ;

- la figure 2 est une vue en perspective, qui représente plus en détail l'implantation des moyens de chauffage sur la barre de torsion du dispositif de commande des figures 1A à 1C ;
- la figure 3 est une vue de face qui représente, en configuration déployée, un générateur solaire de véhicule spatial dont la commande de déploiement est assurée en deux temps au moyen de deux dispositifs de commande conformes à l'invention ;
- la figure 4 est une vue de côté illustrant schématiquement le générateur solaire de la figure 3 en configuration repliée de stockage ;
- la figure 5 est une vue comparable à la figure 4, représentant le générateur solaire en configuration partiellement déployée de transfert ;
- la figure 6 est une vue en coupe longitudinale partielle qui représente une charnière du générateur solaire des figures 4 à 6, dans laquelle est intégré un premier dispositif de commande conçu pour amener le générateur dans sa configuration partiellement déployée de la figure 5 ;
- la figure 7 est une vue en coupe longitudinale qui représente une deuxième charnière du générateur solaire, dans laquelle est intégré un deuxième dispositif de commande conforme à l'invention, utilisé pour amener le générateur dans sa configuration totalement déployée de la figure 3 ;
- les figures 8A, 8B et 8C sont des vues en bout du deuxième dispositif de commande de la figure 8, illustrant les moyens de rattrapage de jeu qui équipent ce dispositif, successivement dans la configuration repliée du générateur solaire, en cours de déploiement partiel et dans sa configuration partiellement déployée de la figure 5 ; et
- les figures 9A et 9B représentent les moyens de verrouillage antiretour qui équipent chacun des dispositifs de commande des figures 6 et 7, respectivement dans leur configuration initiale déverrouillée et dans leur configuration verrouillée, atteinte lorsque la rotation relative souhaitée a été effectuée.

### Description détaillée d'une forme de réalisation préférée de l'invention

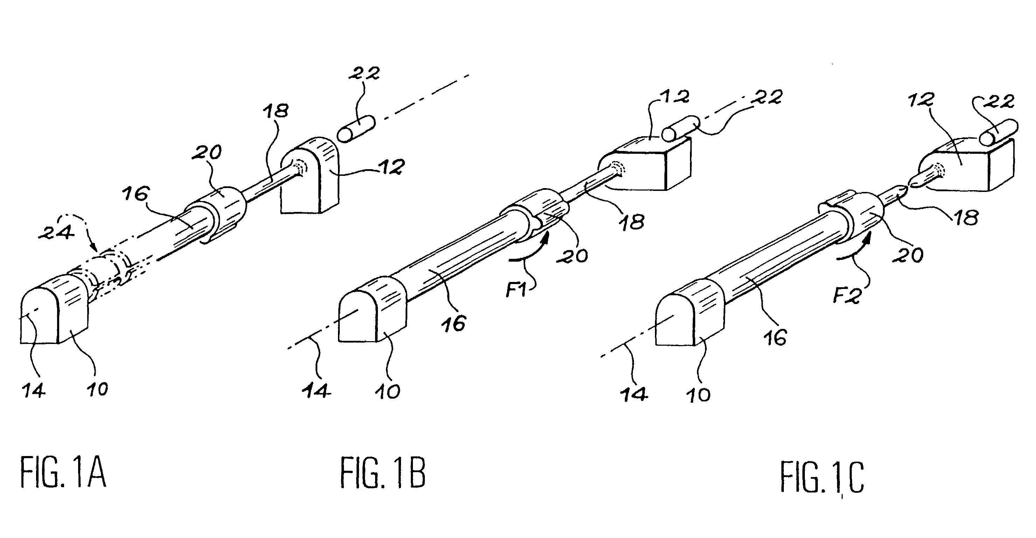

Sur les figures 1A à 1C, on a représenté très schématiquement un dispositif de commande conforme à l'invention, dont la mise en oeuvre induit un couple élevé permettant d'engendrer un angle de rotation relative important entre un premier élément 10, supposé fixe et un deuxième élément 12 à entraîner, autour d'un axe 14.

Le dispositif de commande selon l'invention comprend principalement une barre de torsion 16, en forme de cylindre allongé, réalisée en un alliage bistable à mémoire de forme. La barre de torsion 16 est centrée sur l'axe 14 autour duquel une rotation relative prédéterminée entre les éléments 10 et 12 doit être commandée.

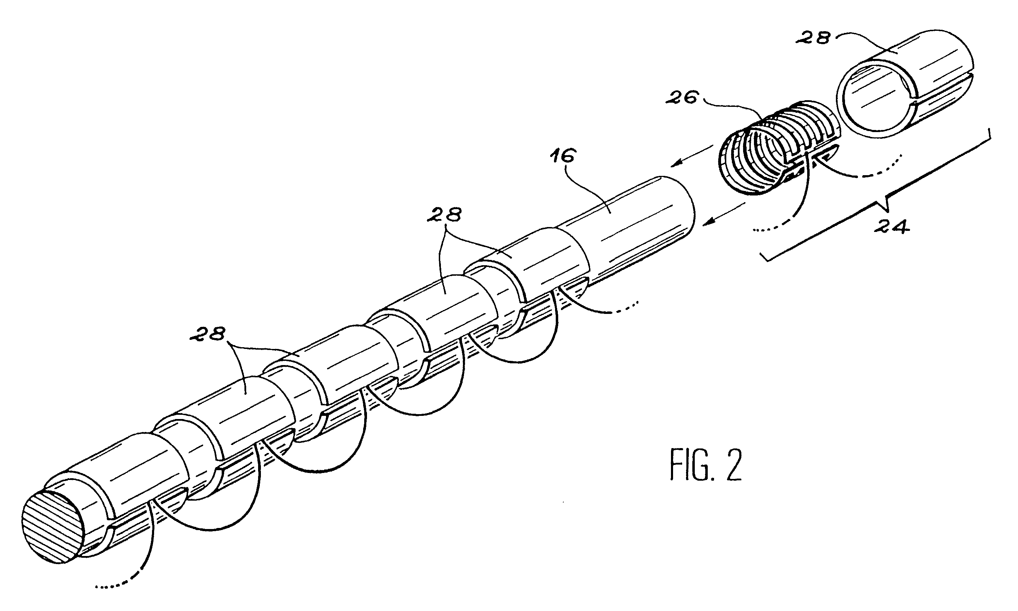

Des moyens de chauffage de la barre de torsion 16 sont prévus, pour commander la mise en oeuvre du dispositif. Ces moyens de chauffage sont illustrés schématiquement en 24 sur la figure 1A. Ils n'ont pas été représentés sur les figures 1B et 1C. Ces moyens de chauffage 24 seront décrits ultérieurement en se référant à la figure 2.

Une première extrémité de la barre de torsion 16 est liée directement en rotation à l'élément fixe 10. La deuxième extrémité de la barre 16 est reliée à l'élément mobile 12 par l'intermédiaire d'un fusible mécanique dont la fonction apparaîtra ultérieurement.

Le fusible mécanique est constitué par une tige cylindrique 18, également centrée sur l'axe 14 et disposée dans le prolongement de la barre de torsion 16. La tige cylindrique 18 présente une section sensiblement inférieure à celle de la barre de torsion 16, et elle est réalisée dans un matériau différent, particulièrement ductile, qui lui permet de se déformer et, si nécessaire, de se rompre, lorsqu'un couple de torsion lui est appliqué.

Les extrémités attenantes de la barre de torsion 16 et de la tige cylindrique 18 sont liées l'une à l'autre en rotation par l'intermédiaire d'une platine de liaison 20. L'autre extrémité de la tige cylindrique 18 est liée à l'élément 12 en rotation.

La rotation relative entre les éléments 10 et 12 est limitée à un angle prédéterminé par une butée illustrée schématiquement en 22 sur les figures 1A à 1C. Cette butée peut être intégrée au dispositif, ou externe à celui-ci, sans sortir du cadre de l'invention.

L'utilisation d'une barre 16 en alliage bistable à mémoire de forme, travaillant en torsion, permet d'engendrer des rotations de forte amplitude (supérieure à 180°) avec un couple important, lors du changement de structure métallurgique de l'alliage, induit par son chauffage. Cependant la masse et l'encombrement du dispositif sont réduits.

La barre 16 est prééduquée en torsion, de telle sorte qu'elle passe progressivement et lentement de la forme illustrée sur la figure 1A à la forme illustrée sur la figure 1C lorsqu'elle est chauffée par les moyens de chauffage 24, de façon à franchir sa température de changement de structure métallurgique.

La figure 1A représente le dispositif dans son état de repos, c'est-à-dire avant la mise en oeuvre des moyens de chauffage 24. La température du dispositif est alors inférieure à la température de changement de structure métallurgique de l'alliage dans lequel est réalisé la barre de torsion 16.

Lorsqu'une puissance de réchauffage constante (non contrôlée, ni pilotée) est appliquée à la barre de torsion 16 au travers des moyens de chauffage 24, répartis tout le long de cette barre de façon à assurer un chauffage homogène, la barre commence à changer de structure métallurgique à une température T0 et cette transformation se termine à une température T1. Les valeurs de ces températures dépendent essentiellement de la nature de l'alliage bistable à mémoire de forme utilisé.

Lorsque la température T0 de début de transformation de la structure métallurgique de l'alliage est atteinte, la rotation relative entre les éléments 10 et 12 commence. En supposant que l'élément 10 soit fixe comme on l'a illustré sur les figures 1A à 1C, cela signifie que la platine de liaison 20 ainsi que l'élément 12 lié à cette platine au travers du fusible 18 commence à tourner lentement autour de l'axe 14, par exemple dans le sens de la flèche F1 sur la figure 1B. Etant donné que le changement de phase de l'alliage à mémoire de forme est fortement endothermique, la barre de torsion 16 génère son couple de torsion au fur et à mesure de l'augmentation naturelle de température assurée par les moyens de chauffage 24.

Dans la pratique, la position finale de la barre de torsion 16, c'est-à-dire l'angle de rotation relative finale atteint lorsque la transformation métallurgique de l'alliage est terminée, est difficilement maîtrisable dans le cadre d'une fabrication non unitaire. En effet, une reproductibilité parfaite de reprise de forme des barres n'est pas pratiquement pas possible. Pour s'affranchir de cette difficulté, on utilise une barre de torsion 16 dont l'angle final de rotation relative est supérieur (par exemple d'environ 10°) à l'angle prédéterminé de la rotation relative que l'on désire commander entre les éléments 10 et 12.

Par conséquent, lorsque cet angle prédéterminé de rotation relative à commander entre les éléments 10 et 12 est atteint, comme l'illustre la figure 1B, la rotation de la platine de liaison 20 autour de l'axe 14, par rapport à l'élément 10 n'est pas terminée. La butée 22 a alors pour fonction de limiter la rotation relative entre les éléments 12 et 14 à l'angle prédéterminé que l'on désire atteindre.

Comme l'illustre la flèche F2 sur la figure 1C, la poursuite de la transformation métallurgique de l'alliage dans lequel est formé la barre de torsion 16 a ensuite pour effet de faire tourner la platine de liaison 20 autour de l'axe 14 par rapport aux éléments 10 et 12, qui sont alors l'un et l'autre immobiles. Le fusible 18 a alors pour fonction d'absorber le couple de torsion qui continue à être engendré par la barre 16, en se vrillant sur lui-même, puis éventuellement en se cassant, comme on l'a représenté. En cas de cassure du fusible 18, des moyens élastiques tels qu'un ressort (non représenté) permettent de maintenir en place les pièces alors libérées.

On évite ainsi que le couple de torsion excédentaire engendré par la barre de torsion 16, après la venue en appui de l'élément 12 contre la butée 22, soit supporté par la barre de torsion 16 elle-même. Tout risque de rupture de cette barre est ainsi supprimé. Cela permet notamment de reconditionner et de réutiliser la barre de torsion 16, si on le souhaite.

Comme on le verra plus en détail par la suite, des moyens de verrouillage anti-retour sont avantageusement prévus, afin de maintenir les éléments 10 et 12 dans leur position angulaire relative atteinte après la mise en oeuvre du dispositif.

Une forme de réalisation préférée des moyens de chauffage 24 va à présent être décrite en se référant à la figure 2.

Comme l'illustre cette figure, ces moyens de chauffage 24 comprennent un ensemble de réchauffeurs constitués par des résistances électriques 26, réoarties tout le long de la barre 16 et collées sur celle-ci. Chacun des réchauffeurs 26 est entouré et maintenu individuellement contre la barre 16 par une bague de cerclage 28. Ces bagues de cerclage permettent aux réchauffeurs 26 de supporter les contraintes de cisaillement importantes engendrées par la torsion de la barre 16, lors de la mise en oeuvre du dispositif.

Il est à noter que les réchauffeurs 26, répartis tout le long de la barre 16, assurent un chauffage homogène de celle-ci, par conduction. Cela permet d'éviter la formation de gradients importants lors du chauffage et, par conséquent, l'introduction de contraintes internes élevées inévitables en présence de tels gradients de température. Le chauffage homogène par conduction assuré par les réchauffeurs 26 permet également l'apport d'une puissance suffisante pour minimiser la sensibilité du fonctionnement aux fuites thermiques par conduction (aux extrémités de la barre) et par effet radiatif, tout en optimisant la durée de réchauffage.

Pour augmenter la fiabilité des moyens de chauffage 24, les réchauffeurs 26 sont avantageusement connectés en parallèle. En cas de dysfonctionnement d'un ou plusieurs des réchauffeurs 26, le dispositif peut tout de même être actionné, grâce aux réchauffeurs non défectueux.

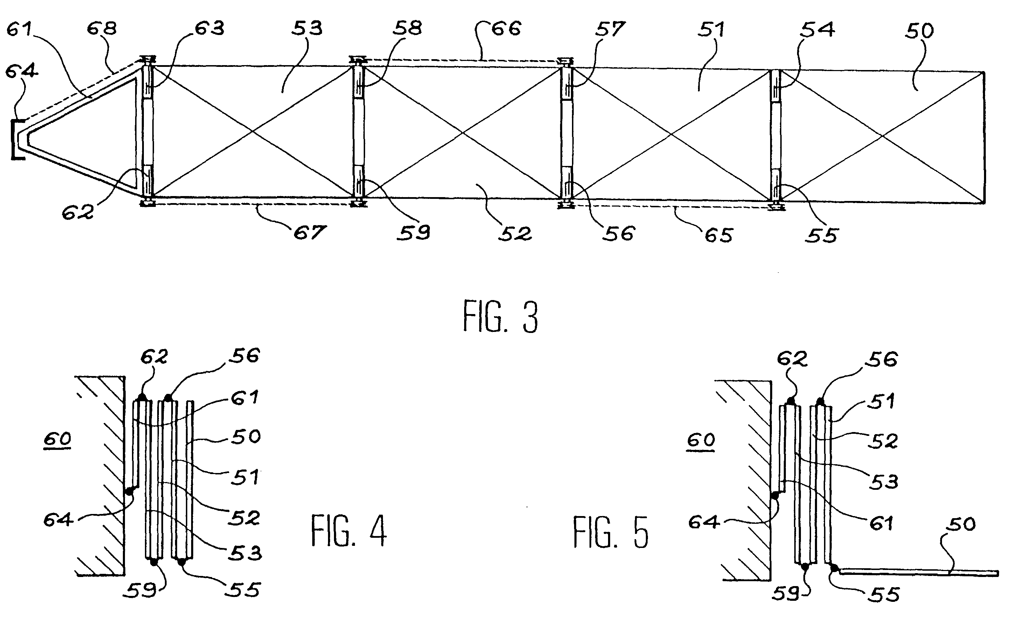

On décrira à présent, en se référant successivement aux figures 3 à 9B, un exemple d'application du dispositif de commande de rotation relative conforme à l'invention à un générateur solaire équipant un véhicule spatial.

Dans l'exemple de réalisation illustré schématiquement sur les figures 3 à 5, on a représenté un générateur solaire comprenant quatre volets 50, 51, 52 et 53 reliés les uns aux autres selon une configuration en accordéon.

Plus précisément, chaque paire de volets adjacents est reliée par deux charnières coaxiales. Ainsi, le dernier volet 50 est relié au volet adjacent 51 par deux articulations 54 et 55, le volet 51 est relié au volet 52 par deux articulations 56 et 57 et le volet 52 est relié au volet de base 53 par deux articulations 58 et 59.

La liaison entre le générateur solaire ainsi constitué et la structure 60 du satellite (figures 4 et 5) est assurée par une pièce 61 en forme de trapèze, elle-même articulée d'une part sur le volet 53 par deux articulations 62 et 63 et, d'autre part, sur la structure 60 du véhicule spatial par une articulation 64, généralement appelée articulation d'emplanture.

Les articulations reliant les volets 50 à 53, la pièce 61 et la structure 60 définissent des axes de pivotement parallèles et sont agencées de façon telle que l'ensemble peut passer de la configuration repliée de stockage illustrée sur la figure 4, dans laquelle les volets 50 à 53 et la pièce 61 sont repliés les uns sur les autres et contre la structure 60 du véhicule, dans la configuration totalement déployée illustrée sur la figure 3, dans laquelle les volets 50 à 53 et la pièce 61 sont tous disposés dans un même plan, perpendiculaire à la face attenante de la structure 60 du véhicule spatial.

Dans la forme de réalisation représentée, on intègre à l'une des articulations 54 reliant les volets 50 et 51 un premier dispositif de commande conforme à l'invention, de façon à pouvoir faire passer le générateur solaire de sa configuration totalement repliée de stockage illustrée sur la figure 4 dans sa configuration partiellement déployée de transfert illustrée sur la figure 5. Dans cette configuration partiellement déployée, les volets 51, 52 et 53 ainsi que la pièce 61 restent totalement repliés contre la structure 60 et le dernier volet 50 est déployé à 90° environ par rapport au volet adjacent 51.

Par ailleurs, un deuxième dispositif de commande conforme à l'invention est intégré dans l'autre articulation 55 qui relie les volets 50 et 51, afin de commander le passage du générateur solaire de sa configuration partiellement déployée de transfert illustrée sur la figure 5 dans sa configuration totalement déployée illustrée sur la figure 3.

Des moyens de conjugaison relient les différentes articulation, de façon que le déploiement du volet 50 de 90° à 180° ait pour effet un déploiement synchronisé des volets 51, 52 et 53, de 0° à 180° et un déploiement de la pièce 61 de 0° à 90°. Ces moyens de conjugaison sont illustrés schématiquement sur la figure 4. Ils comprennent par exemple, de façon connue un premier câble 65 monté sur des poulies associées aux articulations 55 et 56, un deuxième câble 66 monté sur des poulies associées aux articulations 57 et 58, un troisième câble 67 monté sur des poulies associées aux articulations 59 et 62, et un quatrième câble 68 monté sur des poulies associées aux articulations 63 et 64.

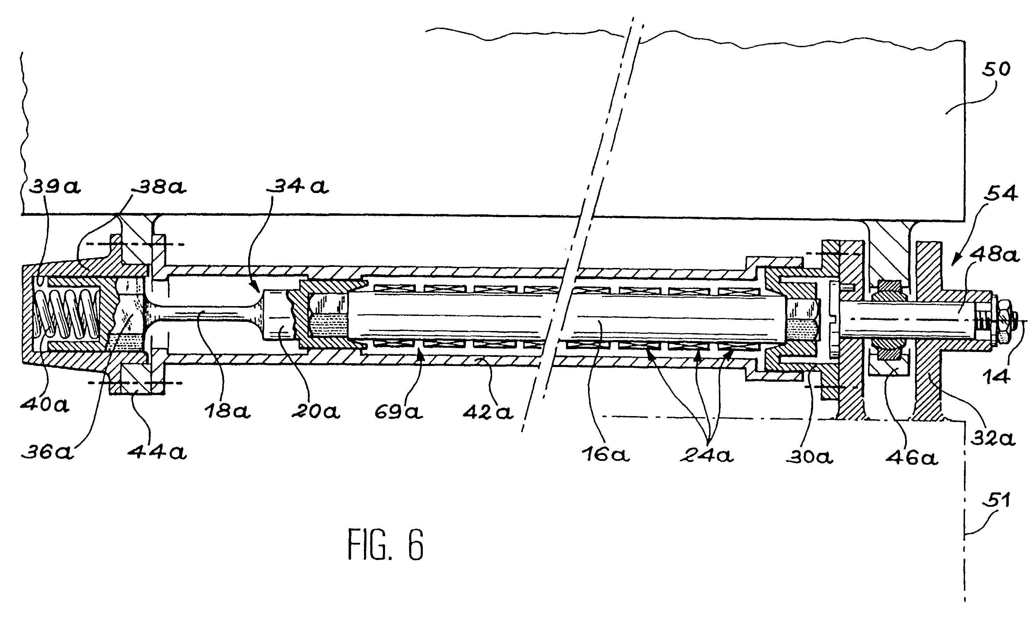

On décrira à présent plus en détail l'articulation 54, en se référant à la figure 6.

Cette articulation 54 intègre un premier dispositif de commande de rotation relative conforme à l'invention, désigné de façon générale par la référence 69a.

On reconnaît en 16a la barre de torsion en alliage bistable à mémoire de forme, centrée sur l'axe 14 des articulations 54 et 55. On reconnaît également en 24a les moyens de chauffage équipant la barre 16a sur toute sa longueur.

Un embout 30a relie en rotation une première extrémité de la barre de torsion 16a à une chape femelle 32a, prévue pour être fixée sur le volet 51. La chape femelle 32a supporte une chape mâle 46a fixée au volet 50, par l'intermédiaire d'un tourillon 48a disposé selon l'axe 14.

A son extrémité opposée, la barre de torsion 16a est prolongée selon l'axe 14 par une pièce 34a, dans laquelle sont réalisés, d'un seul tenant, une platine de liaison 20a, un fusible 18a et un piston 36a.

Le piston 36a est reçu dans un trou borgne 39a usiné dans un embout 38a fixé à une ferrure 44a du volet 50. Plus précisément, le piston 36a est lié en rotation à l'embout 38a, tout en étant mobile en translation selon l'axe 14. Un ressort de compression 40a est emprisonné entre le piston 36a et le fond du trou borgne usiné dans l'embout 38a. Ce ressort 40a permet de maintenir en place les différents éléments du dispositif de commande 69a après la rupture éventuelle du fusible 18a.

Un capotage cylindrique 42a entoure coaxialement le dispositif de commande 69a, sur toute sa longueur. Le capotage 42a est fixé à la ferrure 44a par l'une de ses extrémités et centré sur l'embout 30a par son extrémité opposée.

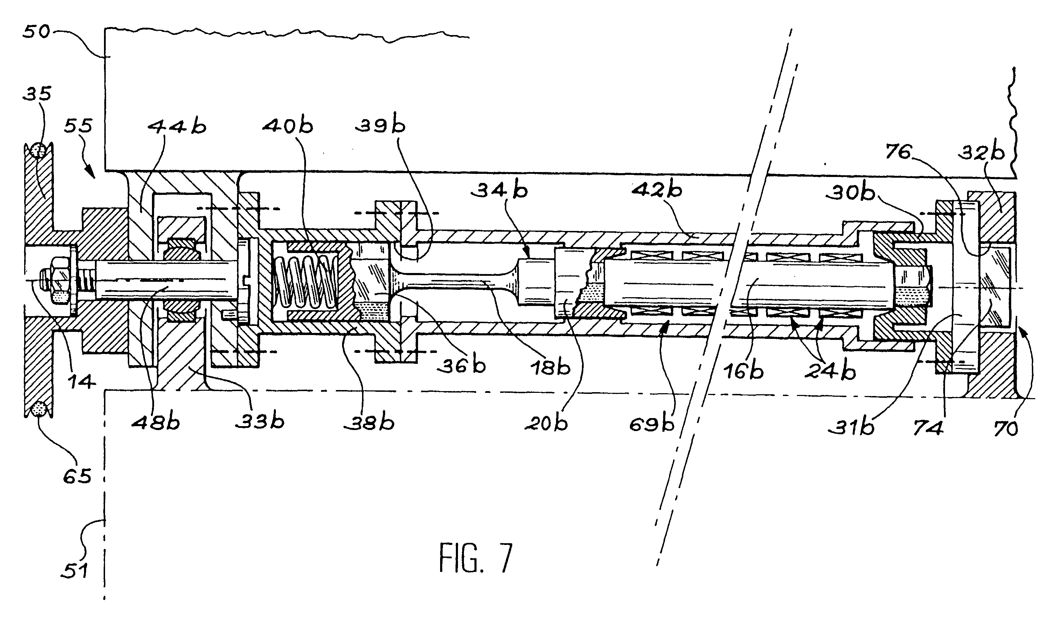

La figure 7 représente la deuxième articulation 55, interposée entre les volets 50 et 51 du générateur solaire. Cette deuxième articulation 55 intègre un deuxième dispositif de commande conforme à l'invention, désigné de façon générale par la référence 69b.

La barre de torsion 16b, en alliage bistable à mémoire de forme, du dispositif de commande 69b, ainsi que les moyens de chauffage 24b de cette barre sont visibles sur la figure 7. La barre de torsion 16b est également centrée sur l'axe 14 commun aux articulations 54 et 55.

Un embout 30b relie en rotation une première extrémité de la barre de torsion 16b à un disque 31b, lui-même centré dans une ferrure 32b, fixée au volet 51.

A son extrémité opposée, la barre de torsion 16b est prolongée selon l'axe 14 par une pièce 34b, dans laquelle sont réalisés, d'un seul tenant, une platine de liaison 20b, un fusible 18b et un piston 36b.

Le piston 36b est reçu dans un trou borgne 39b, usiné dans un embout 38b, fixé à une chape femelle 44b liée au volet 50. Plus précisément, le piston 36b est lié en rotation à l'embout 38b, tout en étant libre en translation selon l'axe 14. Un ressort de compression 40b est emprisonné entre le piston 36b et le fond du trou borgne 39b. Ce ressort 40b permet de maintenir en place les différents éléments du dispositif de commande 69b, après la rupture éventuelle du fusible 18b.

La chape femelle 44b supporte une chape mâle 33b, fixée au volet 51, par l'intermédiaire d'un tourillon 48b, disposé selon l'axe 14. Ce tourillon 48b supporte la poulie 35 sur laquelle passe le câble 65 des moyens de conjugaison précédemment décrits.

Un capotage cylindrique 42b entoure coaxialement le dispositif de commande 69b, sur toute sa longueur. Ce capotage 42b est fixé à l'embout 38b par l'une de ses extrémités et centré sur l'embout 30b par son extrémité opposée.

L'articulation 55 intègre également des moyens 70 de rattrapage de jeu, qui font office de butée limitant à 90° le déploiement partiel du panneau 50 lors de la mise en oeuvre du premier dispositif de commande 69a de la figure 6. En d'autres termes, les moyens 70 de rattrapage de jeu remplissent la fonction de la butée 22 sur les figures 1A à 1C pour le dispositif de commande 69a.

Les moyens 70 de rattrapage de jeu ont, de plus, pour fonction de permettre la libre rotation du volet 50 par rapport au volet 51, jusqu'à sa configuration partiellement déployée de la figure 5, puis d'assurer la venue en prise de ces deux volets 50 et 51 lorsque le déploiement complet du générateur solaire doit être commandé par le dispositif 69b.

Ces moyens 70 de rattrapage de jeu sont interposés entre le disque 31b et la ferrure 32b, fixée au volet 51 du générateur solaire. Ils comprennent une clé 74, qui fait saillie sur la face du disque 31b opposée à l'embout 30b, dans un logement 76 formé dans la ferrure 72. La clé 74 est liée en rotation au volet 50, par l'intermédiaire de la barre de torsion 16b, de la pièce 34b, de l'embout 38b et de la chape femelle 44b.

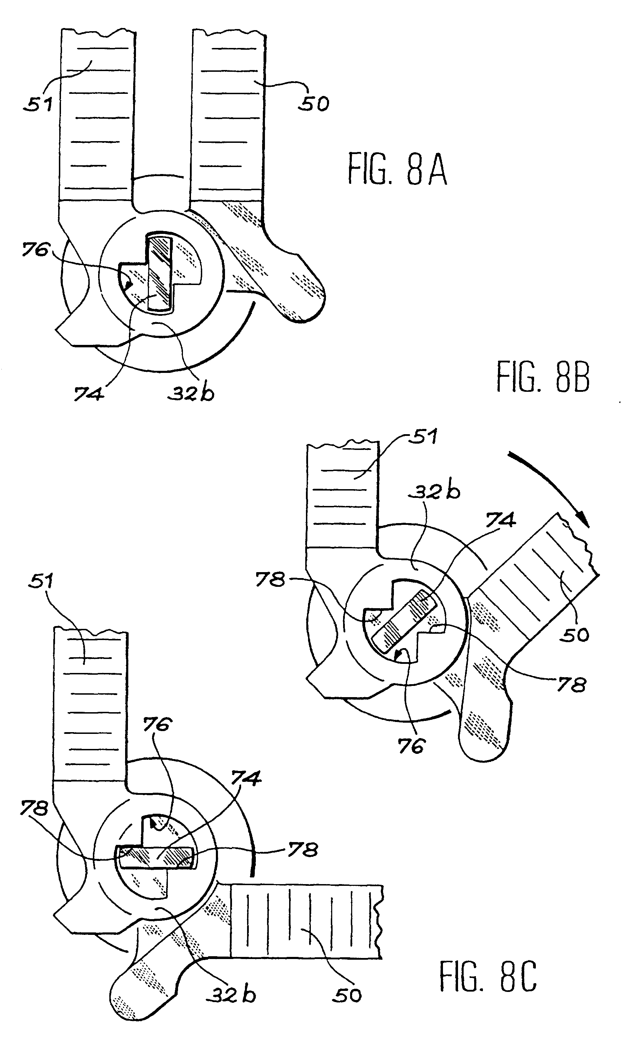

Comme l'illustrent plus précisément les figures 8A à 8C, la forme du logement 76 est telle qu'elle autorise un pivotement relatif entre la clé 74 et la ferrure 72, limité dans ce cas à 90°, dans lé sens du déploiement du volet 50. Dans la configuration initiale repliée illustrée sur la figure 8A, la clé 74 est orientée parallèlement au volet 51. Au fur et à mesure du déploiement partiel commandé par la mise en oeuvre du dispositif 69a de la figure 6, la clé 74 tourne dans l'évidement 76 avec le volet 50, jusqu'à sa venue en appui contre des surfaces de butée 78 de l'évidement 76, comme on l'a illustré sur la figure 8C. Toute rotation supplémentaire du volet 50 est alors empêchée, tant que le dispositif de commande 69b n'est pas mis en oeuvre. Le fusible du dispositif de commande 69a de la figure 6 entre alors en action, afin d'absorber le couple de torsion qui continue à être engendré par la barre de torsion 16a du dispositif de commande 69a.

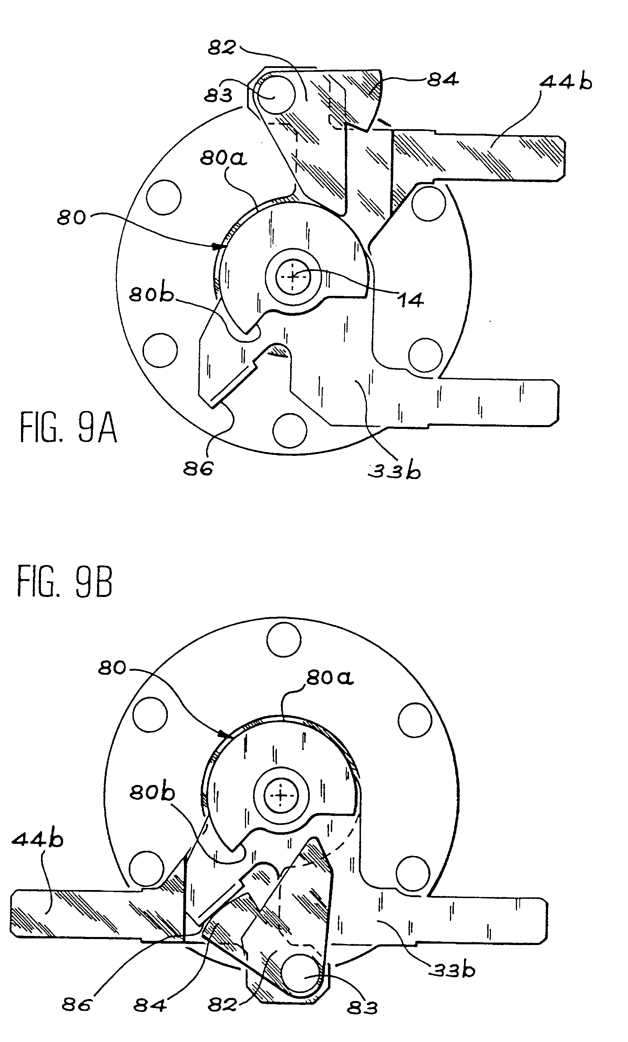

On a illustré schématiquement sur les figures 9A et 9B, des moyens de verrouillage antiretour équipent chacune des articulations 69a et 69b. Ces moyens de verrouillage antiretour peuvent être constitués par tout moyen de verrouillage connu des spécialiste, de sorte que la description des figures 9A et 9B n'est donnée qu'à titre d'exemple non limitatif.

De plus, la description faite en référence à l'articulation 55 de la figure 7 peut être transposée à l'identique pour l'articulation 54 de la figure 6 (le verrouillage anti-retour s'effectuant après une rotation de 90°, et non de 180°).

La chape 33b, liée au volet fixe 51 de l'articulation comporte un guide 80, centré sur son axe 14. Un cliquet 82 est articulé par un axe 83 sur la chape 44b, liée au volet mobile 50 de l'articulation, et maintenu en contact avec le guide 80 par un ressort de torsion (non représenté) intégré à son axe 83. Le cliquet 82 porte un loquet 84, susceptible de venir se placer en face d'une butée mécanique 86 montée, comme le guide 80, sur la chape 33b.

Le guide 80 présente, sur la partie 80a de sa circonférence correspondant à l'angle de déploiement désiré (ici, 180°), une configuration cylindrique centrée sur l'axe 14 de l'articulation. Tant que le cliquet 82 est en contact avec cette partie cylindrique 80a du guide 80, le loquet 84 est maintenu écarté de l'axe de l'articulation et le retour en arrière est possible.

Au-delà de cette partie cylindrique 80a, le guide 80 comporte une partie en creux 80b. Lorsque le cliquet 82 arrive en face de cette partie en creux 80b sous l'effet de la rotation relative entre les deux éléments commandée successivement par les dispositifs 69a et 69b selon l'invention, le cliquet 82 est libéré et pivote vers l'axe de l'articulation, sous l'action du ressort de torsion intégré à son axe. Le loquet 84 vient alors se placer en face de la butée mécanique 86, de sorte qu'un pivotement relatif en sens inverse entre les deux volets 50 et 51 est impossible.

Dans la pratique, le début de la partie en creux 80b du guide 80 est positionné de façon telle que le pivotement du cliquet 82 intervient au moment précis où les deux volets ont pivoté l'un par rapport à l'autre de l'angle désiré. On se trouve alors dans la configuration déployée illustrée sur la figure 9B.

Pour compléter la description du générateur solaire des figures 3 à 5, on observera que les articulations dépourvues de dispositifs de commande conforme à l'invention peuvent être équipées de ressorts donnant peu de couple moteur, afin de limiter les chocs de verrouillage au niveau admissible et de garantir le verrouillage des articulations à 90° pour l'articulation d'emplanture 64 et à 180° pour les articulations inter-volets 56 à 59 et 62, 63.

Dans l'exemple décrit, le déploiement partiel de transfert, puis le déploiement total du générateur solaire s'effectuent de la façon suivante.

Lorsque le déploiement partiel du dernier volet 50 doit être commandé en phase de transfert, un dispositif de gerbage (non représenté) de ce volet est libéré. Le dispositif de commande 69a intégré à l'articulation 54 est alors mis en oeuvre. Le volet 50 s'ouvre donc progressivement jusqu'à 90° lorsque la température de transformation métallurgique de l'alliage dans lequel est réalisée la barre de torsion 16a du dispositif 69a est atteinte. Des moyens de verrouillage antiretour, tels que ceux qui ont été décrits à titre d'exemple en référence aux figures 9A et 9B, sont alors mis en oeuvre automatiquement dans chacune des articulations 54.

Parallèlement, les moyens de conjugaison des volets (câbles 65 à 68 et poulies associées) sont verrouillés à l'aide d'un verrou (non représenté) propre à l'une des articulation.

Au cours de cette phase de déploiement partiel à 90° du dernier volet 50 du générateur solaire, le deuxième dispositif de commande 69b qui équipe l'articulation 55, tourne librement dans la ferrure 32b, jusqu'à ce que la clé 74 vienne en butée contre les surfaces d'extrémité 78 de l'évidement 76. Le dispositif de commande 69b, qui était donc débrayé jusqu'à 90°, participe ensuite par son appui au maintient du volet 50 à 90° et sécurise ainsi le dispositif de commande 69a.

Le fusible 18a qui équipe le dispositif de commande 69a est alors sollicité, éventuellement jusqu'à sa rupture, afin que la barre de torsion 16a du dispositif 69a continue sa rotation jusqu'à sa valeur d'éducation (par exemple, environ 100°) sans entraîner le volet 50.

La lenteur de la motorisation permet une ouverture du volet 50 et son verrouillage à 90° sans aucun choc, avec un surcroît de motorisation très important (couple moteur/couple résistant ≥ 5).

Lorsque le déploiement complet du générateur solaire doit être commandé, un deuxième dispositif de gerbage (non représenté) est libéré et le deuxième dispositif de commande 69b est actionné. Sous l'effet de cet actionnement, les volets 50 à 53 et la pièce 61 s'ouvrent de manière synchronisée, grâce aux moyens de conjugaison, et très lentement grâce à la rotation très lente assurée par l'alliage à mémoire de forme constituant la barre de torsion 16b du dispositif de commande 69b. Les moyens de conjugaison sont conçus de façon telle que l'ouverture du volet 50 de 90° à 180° s'accompagne de l'ouverture des autres volets 51 à 53 de 0° à 180° et du pivotement de la pièce de base 61 de 0° à 90°.

L'ensemble du générateur solaire est ensuite verrouillé par la mise en oeuvre de dispositifs comparables à celui qui a été décrit en référence aux figures 9A et 9B et par une butée du type de la butée 22 sur les figures 1A à 1C. Le couple de torsion qui continue à être appliqué par la barre de torsion 16b en alliage à mémoire de forme du deuxième dispositif de commande 69b est alors supporté par le fusible 18b de ce deuxième dispositif. La commande de rotation se poursuit ainsi jusqu'à la valeur d'éducation d'environ 100° de la barre, sans entraîner les volets, éventuellement jusqu'à la rupture du fusible 18b. Là encore, la lenteur de la motorisation permet une ouverture complète du générateur solaire et son verrouillage en configuration déployée sans aucun choc et en disposant d'une marge de motorisation très importante. Cette marge peut être utilisée pour assurer le déploiement, en cas de défaillance d'une ligne d'articulations.

Il est à noter que chacun des dispositifs de commande 69a et 69b peut être aisément doublé, par exemple en emboîtant deux dispositifs de commande l'un à la suite de l'autre, dans chacune des articulations 54 et 55. La fiabilité de chacun des deux déploiements (partiel et total) à commander est ainsi assurée.

Bien entendu, l'application qui vient d'être décrite en se référant aux figures 3 à 9B n'est donnée qu'à titre d'exemple non limitatif. Ainsi, le nombre d'éléments de la structure à déployer peut être quelconque et le ou les dispositifs de commande de déploiement peuvent être implantés dans d'autres articulations de la structure. Ainsi, un dispositif de commande unique conforme à l'invention peut être implanté dans l'articulation d'emplanture 64, notamment lorsque la structure à déployer ne nécessite pas de déploiement partiel en phase de transfert.

Par ailleurs, il va de soi que le dispositif de commande conforme à l'invention peut être utilisé pour commander l'ouverture d'un quelconque appendice équipant un véhicule spatial, ou de toute autre structure mécanique déployable.

Enfin, il est à noter que la barre en alliage à mémoire de forme présente une structure mécanique telle que son montage dans le dispositif est impossible si elle n'a pas été préalablement reconditionnée dans sa position de référence, après des essais élémentaires. Ce détrompage peut notamment être obtenu en donnant aux deux extrémités de la barre des formes géométriques telles que des hexagones imparfaits.

## Revendications

1. Dispositif de commande d'une rotation relative entre deux éléments (10,12) articulés l'un à l'autre autour d'un axe (14) donné, le dispositif comprenant une barre de torsion (16) en alliage bistable à mémoire de forme, centrée sur ledit axe (14) et liée à chacun des éléments en des emplacements espacés selon ledit axe, et des moyens de chauffage (24) de la barre, dont une mise en oeuvre engendre ladite rotation relative, sous l'effet d'un changement de structure métallurgique de l'alliage, le dispositif étant **caractérisé en ce que** la barre de torsion (16) est apte à engendrer un angle de rotation relative entre lesdits emplacements de la barre, supérieur à un angle prédéterminé de rotation relative à commander entre les éléments (10,12), une butée (22) étant prévue pour limiter l'angle de rotation relative entre les éléments audit angle prédéterminé, et au moins un fusible mécanique (18) étant prévu entre la barre de torsion (16) et un premier (12) desdits éléments, pour absorber une rotation relative excédentaire entre lesdits emplacements de la barre, au-delà dudit angle prédéterminé.

2. Dispositif selon la revendication 1, dans lequel le fusible mécanique est une tige (18) de moindre section que la barre de torsion (16), prolongeant celle-ci selon ledit axe et dont les extrémités sont liées en rotation respectivement à une extrémité de la barre et au premier élément (12).

3. Dispositif selon la revendication 2, dans lequel un moyen élastique (40) est interposé entre la tige (18) et le premier élément (12), de façon à solliciter celui-ci vers la barre de torsion (16), selon ledit axe.

4. Dispositif selon l'une quelconque des revendications précédentes, dans lequel les moyens de chauffage (24) comprennent des réchauffeurs (26) répartis sur toute la longueur de la barre de torsion (16), collés sur celle-ci, et maintenus individuellement par des bagues de cerclage (28).

5. Dispositif selon l'une quelconque des revendications précédentes, dans lequel un mécanisme de verrouillage antiretour (80,82,84,86) est prévu pour s'opposer à toute rotation inverse, après ladite rotation relative entre les éléments (10,12).

6. Structure mécanique déployable, comprenant au moins deux éléments (50,51) reliés l'un à l'autre par au moins une articulation (54,55) et occupant initialement une configuration repliée, et au moins un dispositif de commande (69a,69b) selon l'une quelconque des revendications précédentes, intégré dans ladite articulation, apte à amener ladite structure dans une configuration au moins partiellement déployée.

7. Structure selon la revendication 6, comprenant au moins trois éléments (50 à 53) reliés par au moins une articulation (54 à 58), dans laquelle au moins un dispositif de commande (69a,69b) est intégré dans l'une (55) des articulations et des moyens de conjugaison (65 à 68) relient les articulations entre elles, de façon telle qu'une mise en oeuvre du dispositif de commande amène tous les éléments de la structure dans la configuration déployée.

8. Structure selon la revendication 7, dans laquelle au moins un premier dispositif de commande (69a) est intégré dans une première articulation (54) reliant au moins un dernier élément (50) de la structure à un élément adjacent (51), pour commander un déploiement partiel de ce dernier élément, et au moins un deuxième dispositif de commande (69b) est intégré dans une deuxième articulation (55) de la structure, pour amener celle-ci dans sa configuration déployée, au travers des moyens de conjugaison (65 à 68).

9. Structure selon la revendication 8, dans laquelle le deuxième dispositif de commande (69b) est relié au dernier élément (50) au travers de moyens (70) de rattrapage de jeu aptes à venir en prise lorsque le déploiement partiel du dernier élément a été commandé par le premier dispositif de commande (69a).

## Claims

1. A device for controlling a relative rotation between two elements (10, 12) articulated relative to each other around a given axis (14), the device including a torsion bar (16) made of a bistable shape memory alloy, centred on said axis (14) and connected to each of the elements at points spaced out along said axis, and bar heating means (24), activation of which generates said relative rotation, under the effect of a change in the metallurgical structure of the alloy, the device being **characterised in that** the torsion bar (16) is able to generate an angle of relative rotation between said points on the bar, greater than a pre-set angle of relative rotation to be controlled between the elements (10, 12), a stop (22) being provided to restrict the angle of relative rotation between the elements to said pre-set angle, and at least one mechanical fuse (18) being provided between the torsion bar (16) and a first (12) of said elements, to absorb excess relative rotation between said points on the bar, beyond said pre-set angle.

2. A device according to claim 1, wherein the mechanical fuse is a rod (18) of smaller cross section than the torsion bar (16), extending the latter along said axis and the ends of which are connected in rotation to one end of the bar and to the first element (12) respectively.

3. A device according to claim 2, wherein a resilient means (40) is interposed between the rod (18) and the first element (12), so as to act upon the latter towards the torsion bar (16), along said axis.

4. A device according to any one of the previous claims, wherein the heating means (24) include heaters (26) distributed over the whole length of the torsion bar (16), stuck onto it and individually retained by hooping rings (28).

5. A device according to any one of the previous claims, wherein a reverse running stop locking mechanism (80, 82, 84, 86) is provided to oppose any reverse rotation, after said relative rotation between the elements (10, 12).

6. A deployable mechanical structure, including at least two elements (50, 51) connected to each other by at least one articulation (54, 55) and initially occupying a folded configuration, and at least one control device (69a, 69b) according to any one of the previous claims, built into said articulation, able to bring said structure into an at least partially deployed configuration.

7. A structure according to claim 6, including at least three elements (50 to 53) connected to each other by at least one articulation (54 to 58), wherein at least one control device (69a, 69b) is built into one (55) of the articulations and interlocking means (65 to 68) connect the articulations to each other, so that activating the control device brings all the elements of the structure into the deployed configuration.

8. A structure according to claim 7, wherein at least a first control device (69a) is built into a first articulation (54) connecting at least one last element (50) of the structure to an adjacent element (51), to control a partial deployment of this last element, and at least one second control device (69b) is built into a second articulation (55) of the structure, to bring it into its deployed configuration, through the interlocking means (65 to 68).

9. A structure according to claim 8, wherein the second control device (69b) is connected to the last element (50) through play take-up means (70) able to engage when the partial deployment of the last element has been controlled by the first control device (69a).

## Patentansprüche

1. Vorrichtung zur Steuerung einer Relativdrehung zwischen zwei Elementen (10,12), die um eine vorgegebene Achse (14) drehbar miteinander verbunden sind, wobei die Vorrichtung eine Torsionsstange (16) aus einer bistabilen Formgedächtnislegierung umfaßt, die um die Achse (14) herum angeordnet und mit jedem der Elemente an entlang der Achse beabstandeten Stellen verbunden ist, sowie Mittel (24) zum Heizen der Stange, deren Betätigung durch den Effekt einer Veränderung der metallurgischen Legierungsstruktur die Relativdrehung erzeugt, wobei die Vorrichtung **dadurch gekennzeichnet ist, daß** die Torsionsstange (16) dazu ausgelegt ist, einen Relativdrehwinkel zwischen den Stellen der Stange zu erzeugen, der größer als ein anzusteuernder vorbestimmter Relativdrehwinkel zwischen den Elementen (10, 12) ist, wobei ein Anschlag (22) vorgesehen ist, um den Relativdrehwinkel zwischen den Elementen auf den vorbestimmten Winkel zu begrenzen, und wobei wenigstens eine mechanische Sicherung (18) zwischen der Torsionsstange (16) und einem ersten (12) der Elemente vorgesehen ist, um eine überschüssige Relativdrehung zwischen den Stellen der Stange über den vorbestimmten Winkel hinaus zu absorbieren.

2. Vorrichtung nach Anspruch 1, bei der die mechanische Sicherung ein Stab (18) mit kleinerem Querschnitt als die Torsionsstange (16) ist, der diese entlang der Achse verlängert und dessen Enden drehungsübertragend mit einem Ende der Stange bzw. mit dem ersten Element (12) verbunden sind.

3. Vorrichtung nach Anspruch 2, bei der ein elastisches Mittel (40) derart zwischen dem Stab (18) und dem ersten Element (12) zwischengefügt ist, daß jenes um die Achse zur Torsionsstange (16) hin beaufschlagt wird.

4. Vorrichtung nach einem der vorhergehenden Ansprüche, bei der die Heizmittel (24) Heizer (26) umfassen, die über die ganze Länge der Torsionsstange (16) verteilt und auf diese aufgeklebt sind und einzeln durch Umreifungsringe (28) gehalten werden.

5. Vorrichtung nach einem der vorhergehenden Ansprüche, bei der ein Antirückdrehungs-Verriegelungsmechanismus (80, 82, 84, 86) vorgesehen ist, um nach der Relativdrehung zwischen den Elementen (10, 12) jeder Zurückdrehung entgegenzuwirken.

6. Ausklappbare mechanische Struktur, umfassend wenigstens zwei Elemente (50, 51), die miteinander mittels wenigstens eines Gelenks (54, 55) verbunden sind und anfänglich eine eingeklappte Konfiguration einnehmen, sowie wenigstens eine Steuervorrichtung (69a, 69b) nach einem der vorhergehenden Ansprüche, die in das Gelenk integriert und dazu ausgelegt ist, die Struktur in eine wenigstens teilweise ausgeklappte Konfiguration zu bringen.

7. Struktur nach Anspruch 6, umfassend wenigstens drei Elemente (50 bis 53), die mittels wenigstens eines Gelenks (54 bis 58) miteinander verbunden sind, wobei wenigstens eine Steuervorrichtung (69a, 69b) in eines (55) der Gelenke integriert ist und Verbindungsmittel (65 bis 68) die Gelenke derart miteinander verbinden, daß eine Betätigung der Steuervorrichtung alle Elemente der Struktur in die ausgeklappte Konfiguration bringt.

8. Struktur nach Anspruch 7, bei der wenigstens eine erste Steuervorrichtung (69a) in ein erstes Gelenk (54) integriert ist, welches wenigstens ein letztes Element (50) der Struktur mit einem angrenzenden Element (51) verbindet, um ein partielles Ausklappen dieses letzten Elements zu steuern, und wobei wenigstens eine zweite Steuervorrichtung (69b) in ein zweites Gelenk (55) der Struktur integriert ist, um diese mittels der Verbindungsmittel (65 bis 68) in die ausgeklappte Konfiguration zu bringen.

9. Struktur nach Anspruch 8, bei der die zweite Steuervorrichtung (69b) mit dem letzten Element (50) durch Spielverringerungsmittel (70) verbunden ist, die dazu ausgelegt sind, in Eingriff zu gelangen, wenn das partielle Ausklappen des letzten Elements durch die erste Steuervorrichtung (69a) gesteuert worden ist.
